**Europäisches Patentamt**

**European Patent Office**

**Office européen des brevets**

(11) Veröffentlichungsnummer: **0 086 863**
**A1**

(12) # EUROPÄISCHE PATENTANMELDUNG

(21) Anmeldenummer: **82102197.9**

(22) Anmeldetag: **18.03.82**

(51) Int. Cl.³: **C 02 F 3/30**
**C 02 F 3/28**

(30) Priorität: **18.02.82 CH 1009/82**

(43) Veröffentlichungstag der Anmeldung:
**31.08.83 Patentblatt 83/35**

(84) Benannte Vertragsstaaten:
**DE**

(71) Anmelder: **GEBRÜDER SULZER
AKTIENGESELLSCHAFT
Zürcherstrasse 9
CH-8401 Winterthur(CH)**

(72) Erfinder: **Ginocchio, Julio
Rohrhaldenstrasse 35
CH-8712 Stäfa(CH)**

(74) Vertreter: **Dipl.-Ing. H. Marsch Dipl.-Ing. K. Sparing
Dipl.-Phys.Dr. W.H. Röhl Patentanwälte
Rethelstrasse 123
D-4000 Düsseldorf(DE)**

(54) Verfahren und Anlage zur biologischen Denitrifikation von Grundwasser.

(57) Wasser wird mit Wasserstoff angereichert und im Bereich einer Grundwasserfassung (2) in den Boden (1) eingeleitet. Unter den anaeroben Bedingungen im Boden (1) bauen Mikroorganismen den Nitrat-Gehalt des Grundwassers in einem autotrophen Denitrifikationsverfahren direkt im Boden (1) ab. Ersetzt man den Wasserstoff durch organischen Kohlenstoff, so erfolgt der gleiche Abbau im heterotrophen Verfahren.

Durch das neue Verfahren werden Investitionsaufwand und Platzbedarf für Denitrifikationsanlagen erheblich reduziert.

EP 0 086 863 A1

./...

Fig. 1

P. 5688/Wg/IS

**Gebrüder Sulzer, Aktiengesellschaft, Winterthur/Schweiz**

Verfahren und Anlage zur biologischen Denitrifikation
von Grundwasser

Die Erfindung betrifft ein Verfahren zur biologischen Denitrifikation von Grund- und/oder durch Uferfiltration gewonnenem Oberflächenwasser, die einem Grundwasserbrunnen
entnommen werden, mit Hilfe von autotrophen und/oder
heterotrophen Mikroorganismen, sowie eine Anlage zur Durchführung des Verfahrens.

Viele Grund- oder durch Uferfiltration gewonnene Oberflächenwässer erfordern heute eine Behandlung, bei der ihr
Gehalt an Nitriten und/oder Nitraten abgebaut wird. Eine
bekannte Art derartiger Behandlungen besteht in der biologischen Denitrifikation, bei der anaerobe Mikroorganismen
Nitrit- bzw. Nitrat-Ionen zu elementarem Stickstoff abbauen.
Hierbei unterscheidet man autotrophe und heterotrophe Mikroorganismen je nachdem, ob der von ihnen für das Wachstum
benötigte Zellkohlenstoff aus Kohlendioxid oder aus organischen Verbindungen bezogen wird (H.G.Schlegel "Allgemeine
Mikrobiologie", 4. Auflage, Stuttgart, 1976, Seite 162).

Für eine sogenannte autotrophe Denitrifikation ist es
notwendig, dem zu denitrifizierenden Wasser Wasserstoff
zuzusetzen, während für einen heterotrophen Abbau der
Nitrate bzw. Nitrite dem Wasser organischer Kohlenstoff,
z.B. als Essigsäure, Aethanol oder Melasse, beigemischt
werden muss.

Bisher sind für derartige biologische Denitrifikationen von Trinkwasser relativ grosse Anlagen erforderlich, da beispielsweise in den anaeroben Denitrifikations-Reaktoren, in denen die Nitrite bzw. Nitrate durch die Mikroorganismen abgebaut werden, Verweilzeiten von einigen Stunden erforderlich sind; weiterhin ist es notwendig, das den Denitrifikations-Reaktor verlassende Wasser zu filtrieren und zu entkeimen, wofür weitere Anlageteile zur Verfügung gestellt werden müssen (J.C.Ginocchio "Denitrifikation des Trinkwassers" Wasserwirtschaft 70 (1980), Heft 12, Seite 397-401, insbesondere Bild 9).

Aufgabe der Erfindung ist es, diesen Aufwand an Investitionen und den Platzbedarf für derartige Denitrifikationen von Grundwasser zu reduzieren. Nach der vorliegenden Erfindung wird diese Aufgabe dadurch gelöst, dass das zu denitrifizierende Rohwasser im Umgebungsbereich des Grundwasserbrunnens direkt im Boden künstlich denitrifiziert wird, indem Wasser mit Wasserstoff und/oder organischem Kohlenstoff angereichert und, um den Grundwasserbrunnen herum verteilt, in die wasserführenden Bodenschichten eingebracht wird; eine Anlage zur Durchführung des Verfahrens ist gekennzeichnet durch eine Wasserquelle für anzureicherndes Wasser, ferner durch mindestens eine Vorrichtung zum Anreichern des der Wasserquelle entnommenen Wassers mit Wasserstoff oder organischem Kohlenstoff und schliesslich durch ein von der Anreicherungsvorrichtung ausgehendes Verteilsystem, das zu um den Grundwasserbrunnen herum im Abstand verteilten, in die wasserführenden Bodenschichten reichenden Verteilrohren führt.

Bei dem neuen Verfahren dienen die wasserführenden Schichten des Bodens in der Umgebung des Grundwasserbrunnens, also das natürliche Grundwasserreservoir selbst, als anaerober Denitrifikations-Reaktor; weiterhin wirkt das Erdreich gleichzeitig als Filter. Auf diese Weise werden wesentliche Teile der bisher notwendigen, ausgedehnten und voluminösen Anlage entbehrlich.

Das anzureichernde Wasser sollte zweckmässigerweise selbst möglichst wenig Nitrite bzw. Nitrate enthalten und darüberhinaus möglichst weitgehend frei von Chlor und Sauerstoff sein. Es kann aus einer beliebigen geeigneten Quelle stammen. Mit Vorteil wird dafür jedoch - gegebenenfalls nach einer Anlaufzeit von einigen Wochen - ein Teil des denitrifizierten Rohwassers aus dem Grundwasserbrunnen verwendet.

Um bei mit Wasserstoff angereichertem Wasser für eine autotrophe Denitrifikation die Menge Wasserstoff pro Volumeneinheit Wasser zu erhöhen, ist es weiterhin zweckmässig, wenn das anzureichernde Wasser vor der Anreicherung auf erhöhten Druck gebracht wird; die Wasserstoffladung setzt sich dabei aus im Wasser gelöstem und im Wasser dispergierten Wasserstoff zusammen. Der erhöhte Druck kann durch Pumpen erzeugt oder mit Hilfe einer statischen Wassersäule hergestellt werden. Der Wasserstoffeintrag erfolgt beispielsweise mit herkömmlichen Begasungseinrichtungen, von denen besonders solche mit statischen Mischelementen geeignet sind.

Im allgemeinen sind im Grundwasser genügende Mengen Kohlendioxid ($CO_2$) vorhanden, um bei einer autotrophen Denitrifikation den für das Wachstum der Organismen notwendigen Kohlenstoff bereitzustellen. Falls notwendig, ist es jedoch auch möglich, dem mit Wasserstoff angereicherten Wasser zusätzlich Kohlendioxid ($CO_2$) zuzugeben. Die autotrophe Denitrifikation ist sehr umweltfreundlich.

Das Zusetzen von organischem Kohlenstoff ist - gegenüber einem Eintrag von gasförmigem Wasserstoff - relativ einfach durch Beimischen einer der erwähnten organischen Flüssigkeiten möglich; als besonders wirtschaftlich haben sich als Kohlenstoffquelle Essigsäure und Aethanol erwiesen. Weiterhin können dem mit organischem Kohlenstoff angereicherten Wasser als Nährstoffe Phosphate, wie Kalium- und Natrium-Phosphate - insbesondere Dinatriumphosphat - beigemischt werden, um den Reaktionsablauf der biologisch-chemischen Reaktionen zu beschleunigen.

Der Abstand der Verteilrohre vom Grundwasserbrunnen ist variabel und bestimmt sich aus den hydrodynamischen - beispielsweise den Strömungswiderständen bzw. -geschwindigkeiten für das Grundwasser im Boden - und den biotechnischen - beispielsweise dem abzubauenden Nitratgehalt des Grundwassers - Gegebenheiten des Einzelfalles.

Das neue Verfahren kann sowohl rein autotroph als auch nur heterotroph durchgeführt werden; sind die Nitrat-Gehalte sehr hoch, so empfiehlt sich eine heterotrophe und eine autotrophe Stufe vorzusehen. Die heterotrophe Denitrifikation findet dabei in grösserem Abstand vom Grundwasserbrunnen als die autotrophe statt. Hierfür ist es zweckmässig, wenn bei der entsprechenden Anlage die Verteilrohre auf mindestens zwei Kreisen mit unterschiedlichen Radien konzentrisch um den Grundwasserbrunnen herum angeordnet sind, und wenn ferner die vom Grundwasserbrunnen weiter entfernten Verteilrohre mit einer Anreicherungsvorrichtung für organischen Kohlenstoff verbunden sind, während die Verteilrohre näher beim Grundwasserbrunnen an die Anreicherungsvorrichtung für Wasserstoff angeschlossen sind.

Im folgenden wird die Erfindung anhand von Ausführungsbeispielen im Zusammenhang mit der Zeichnung näher erläutert.

Fig. 1 zeigt schematisch eine Anlage zur Durchführung des zweistufigen Verfahrens mit einer "inneren" autotrophen und einer "äusseren" heterotrophen Stufe;

Fig. 2 gibt eine Vorrichtung zum Anreichern von Wasser mit Wasserstoff wieder;

Fig. 3 veranschaulicht in einem Diagramm den Nitrat-Abbau für ein einstufiges autotrophes Verfahren in Abhängigkeit vom Abstand der Verteilrohre vom Grundwasserbrunnen für zwei unterschiedliche konstante Mengen an dem Grundwasser entnommenen Wasser;

Fig. 4 verdeutlicht den mit einer Anlage nach Fig. 1 erzielten Nitrat-Abbau in Abhängigkeit vom Abstand vom Grundwasserbrunnen.

Das im Boden 1 verteilte Grundwasser wird in einem Grundwasserbrunnen 2 gefasst, zu dem Horizontal-Fassungsrohre 3 führen. Das im Brunnen 2 gefasste Wasser wird von einer Pumpe 4 angesaugt und über eine Leitung 5 einem Trinkwasserreservoir 6 zugeführt; für seine Belüftung ist eine Belüftungsstation 7 bekannter Konstruktion vorgesehen, vor der eine Eintragstelle 8 für Sauerstoff oder Luftsauerstoff liegt, an der etwa 8 g Sauerstoff/$m^3$ gelöst werden. Weiterhin befindet sich in der Leitung 5 zwischen der Belüftungsstation 7 und dem Reservoir 6 eine Entkeimungsstelle 9, an der zu Desinfektion des Trinkwassers Chlor in bekannter Weise und Menge - beispielsweise 0,2 g Chlor/$m^3$ - beigemischt wird. Eine Speiseleitung 10 führt vom Reservoir 6 in ein nicht weiter dargestelltes Versorgungsnetz.

0086863

Stromaufwärts der Belüftungseinrichtung 7, 8 zweigt aus der Leitung 5 eine Leitung 11 ab, die zu einem Wasserbecken 12 führt; in diesem wird - getrennt von dem belüfteten und gechlorten Trinkwasser - bereits denitrifiziertes Wasser gespeichert, das als anzureicherndes Wasser dienen soll.

Aus dem Becken 12 führt daher eine mit einer weiteren Pumpe 13 bestückte Leitung 14 zu einer Begasungs- oder Anreicherungsvorrichtung 15, in der das dem Becken 12 entnommene Wasser aus einer - schematisch als Gasflasche angedeuteten - Wasserstoffquelle 16 mit Wasserstoff angereichert wird, ehe es über Leitungen 17 einem inneren Kreis von um den Grundwasserbrunnen 2 konzentrisch angeordneten Verteilrohren 18i zugeführt wird. Diese aus Metall, Kunststoff, Asbestzement oder Keramik gefertigten Rohre 18 sind im Bereich der grundwasserführenden Bodenschichten mit Durchtrittsöffnungen 19 versehen, durch die das mit Wasserstoff beladene Wasser in das Grundwasser hinein abfliessen kann.

Eine weitere Leitung 20 verbindet die Begasungsvorrichtung 15 mit einem zweiten Reinwasser-Reservoir 21. Diese zweite Quelle für anzureicherndes Wasser wird beispielsweise beim Anlaufen des Verfahrens verwendet, ehe im Grundwasserbrunnen 2 ausreichend denitrifiziertes Wasser zur Verfügung steht. Sie kann jedoch auch während des ganzen Verfahrensablaufs anstatt des oder ergänzend zu dem Brunnen 2 für die Bereitstellung von anzureicherndem Wasser dienen. Selbstverständlich ist es andererseits auch möglich, das Verfahren ohne eine zweite Reinwasserquelle 21 mit nitratversuchtem Wasser aus dem Grundwasserbrunnen 2 anlaufen zu lassen. Ein solches Vorgehen bedingt lediglich eine etwas längere Anlaufzeit, ehe Brunnenwasser mit dem gewünschten niedrigen Nitrat-Gehalt zur Verfügung steht. Mit 22 ist eine Dosierstelle für das Eintragen von Kohlendioxid in den wasserstoffbeladenen Wasserstrom bezeichnet. Da Kohlendioxid im Wasser relativ leicht löslich ist, ist sein Eintrag in das Wasser problemlos durchzuführen.

Aus dem Wasserbecken 12 führt eine zweite Leitung 23, in der eine Förderpumpe 24 vorgesehen ist, zu je einer Dosierstelle 25 und 26, an der organischer Kohlenstoff, beispielsweise in der Form von Essigsäure, zudosiert bzw. gegebenenfalls Nährstoffe in Form von beispielsweise einer wässrigen Dinatriumphosphat-Lösung ($Na_2HPO_4 \cdot 12\ H_2O$) zugegeben werden. Das mit diesen Zusätzen angereicherte Wasser, mit dem eine heterotrophe Denitrifikation des Grundwassers ausgelöst wird, fliesst über Leitungen 27 in einen zweiten äusseren Kranz von Verteilrohren 18a, deren Abstand vom Grundwasserbrunnen 2 grösser ist als derjenige der Rohre 18i des inneren Kreises. Selbstverständlich kann auch das Verteilsystem für die "äussere" heterotrophe Denitrifikation statt aus dem Becken 12 ganz oder teilweise mit Wasser aus dem Speicher 21 beschickt werden.

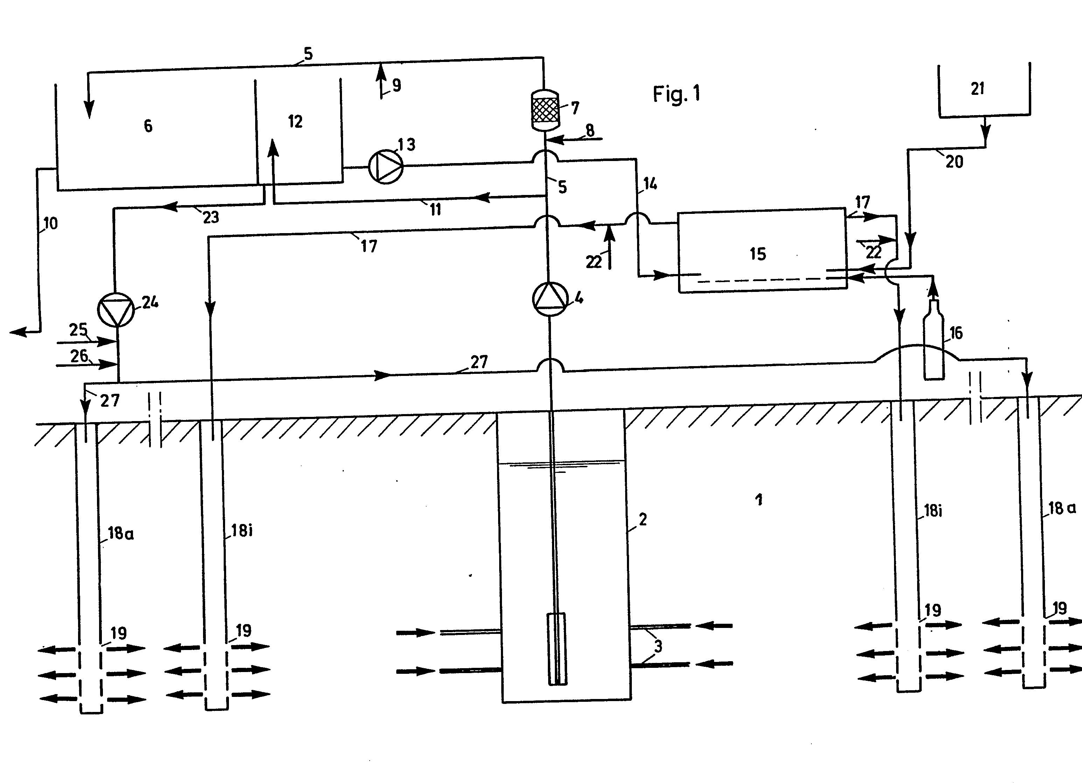

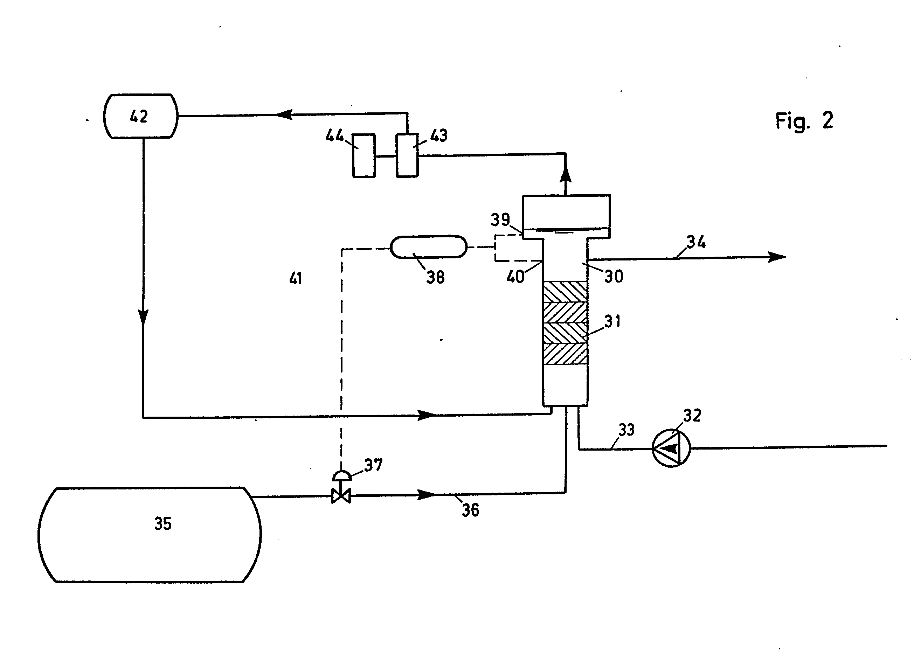

Die in Fig. 2 gezeigte Vorrichtung für das Anreichern des Wassers mit Wasserstoff enthält eine Mischstrecke 30, in der beispielsweise statische Mischelemente 31 vorhanden sind. Von einer Pumpe 32 in einer Leitung 33 gefördert - und gegebenenfalls auf erhöhten Druck gebracht - durchsetzt das anzureichernde Wasser die Mischstrecke 30 von unten nach oben und wird dabei mit Wasserstoff begast, ehe es über eine Leitung 34 der weiteren Verwendung zugeführt wird. Die Elemente 32, 33 und 34 entsprechen somit beispielsweise der Pumpe 13 und den Leitungen 14 und 17 der Fig. 1.

Wasserstoff wird der Mischstrecke 30 aus einem der Gasflasche 16 in Fig. 1 entsprechenden Hochdruckbehälter 35, in dem ein Druck von beispielsweise 20 000 KPa herrscht, über eine Speiseleitung 36 zugeführt, in der ein Regel- und Reduzierventil 37 vorgesehen ist. Das Reduzierventil 37 ist gesteuert von einem Zweipunkt-Niveau-Regler 38 für den Wasserstand im Kopf der Mischstrecke 30, die unter einem Druck von beispielsweise 2500 KPa steht; es wird in Richtung grösserer Oeffnung verstellt, wenn der Wasserstand das obere Niveau 39 überschreitet und wird weiter geschlossen, sobald der Wasserstoffdruck den Wasserspiegel unter das untere Niveau 40 drückt. Um die Anreicherung von Wasserstoff im Wasser zu verbessern, ist darüberhinaus ein die Mischstrecke enthaltender geschlossener Wasserstoffkreislauf 41 vorgesehen. In diesem ist ein Zwischenbehälter 42 für Wasserstoff vorhanden, in dem ein Druck von beispielsweise 5000 KPa herrscht. Die zwischen dem Kopf der Mischstrecke 30 und dem Zwischenbehälter 42 herrschende Druckdifferenz wird überwunden durch einen Verdichter 43, der von einem Motor 44 angetrieben ist. Ohne besondere Regeleingriffe zirkuliert Wasserstoff aufgrund des Druckgefälles zwischen dem Behälter 42 und der Mischstrecke 30 im Kreislauf 41, wodurch die Begasungswirkung der Mischstrecke 30 erheblich gesteigert werden kann.

Beispiel 1:

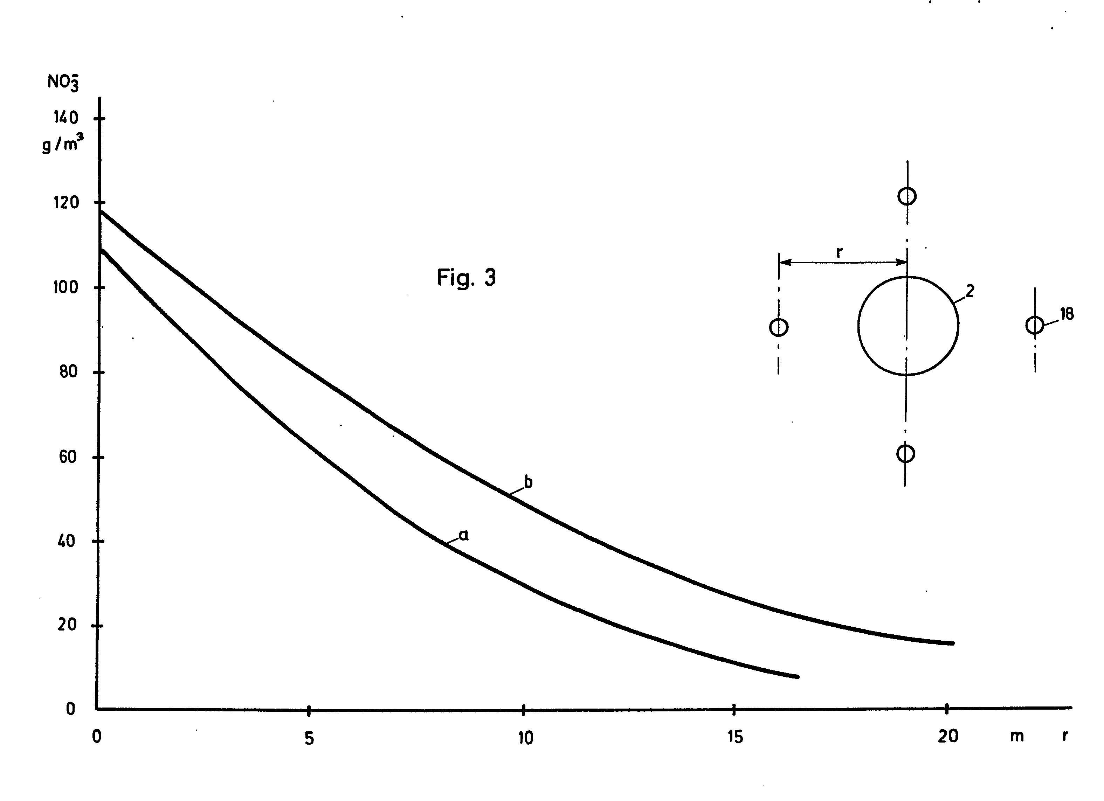

In dem ersten Beispiel wird die Wirkung einer einstufigen autotrophen Denitrifikation direkt im Boden für zwei unterschiedliche Entnahmemengen aus dem Grundwasserbrunnen 2 untersucht. Für das Einbringen des mit Wasserstoff angereicherten Wassers in den Boden 1 sind vier Verteilrohre 18 so um den Grundwasserbrunnen 2 herum angeordnet, wie in Fig. 3 skizziert. Der Abstand "r" beträgt 20 m.

Die den Grundwasserbrunnen 2 entnommene Gesamtwassermenge beträgt 2000 $m^3$/d, die von der Pumpe 4 gefördert wird. Der anfängliche Nitrat-Gehalt des Brunnenwassers beträgt 92 $g/m^3$. Während der Anlaufphase des Verfahrens wird aus dem Speicher 21 Wasser in einer Menge von 200 $m^3$/d entnommen und der Vorrichtung 15 zugeleitet. In dieser wird dieses Wasser mit bis zu 70 $g/m^3$ Wasserstoff angereichert, der in dem Wasser teils gelöst, teils dispergiert aufgenommen wird.

Das angereicherte Wasser wird den Rohren 18i zugeleitet und tritt in das Grundwasser aus, wobei sich der zuvor gelöste und dispergierte Wasserstoff im Grundwasser löst.

Nach einer Verfahrensdauer von etwa 4 Wochen ergeben die Analysen im Brunnen 2, dass der Nitrat-Gehalt auf etwa 11 $g/m^3$ gesunken ist.

Neben der Nitrat-Analyse sind in dem System während der Durchführung des neuen Verfahrens weitere Messungen vorgenommen worden, um zu kontrollieren, ob durch das neue Verfahren andere, für die Qualität des Wassers wesentliche Grössen in unzulässiger Weise verändert worden sind. Die Ergebnisse zeigt Tabelle I. In ihrer ersten Spalte sind die überwachten und gemessenen Grössen, in der zweiten die zugehörigen Einheiten und in den Spalten 3 bzw. 4 die Messwerte für das nitrat-haltige Rohwasser bzw. für das denitrifizierte Brunnenwasser angegeben.

Die erste Zeile (T) gibt die Temperatur in $^\circ$C wieder; in Zeile 2 (E) ist die Extinktion bei 254 nm Wellenlänge angegeben, die ein Mass für im Wasser gelöste organische Stoffe ist. Zeile 3 zeigt als Mass für die Sauberkeit des Wassers die Trübung (Tr) in FTE (Formazin-Trübungs-Einheiten) bzw. in NTU (Nephelometric Turbidity Units); pH-Werte, Sauerstoffkonzentrationen und Nitrat-Gehalte sind in den Zeilen pH, $O_2$ und $NO_3^-$ aufgezeigt, während die letzte Zeile den $KMnO_4$-Verbrauch angibt, der den Schmutzstoffinhalt an oxidierbaren Substanzen wiederspiegelt.

Ein Vergleich der Kolonnen 3 und 4 zeigt, dass, abgesehen vom Sauerstoff- und Nitrat-Gehalt, praktisch keine Unterschiede zwischen den Messwerten des Rohwassers und des denitrifizierten Wassers bestehen.

Nach der 4-wöchigen Anlaufzeit wird das anzureichernde Wasser nicht mehr dem Speicher 21, sondern dem Wasserbecken 12 (Fig. 1) über die Leitung 14 entnommen. In Fortsetzung der Untersuchungen werden die Verteilrohre 18 in Stufen 5 m zwischen 5 und 20 m vom Grundwasserbrunnen 2 entfernt angeordnet, um die Wirkung des autotrophen Denitrifikationsverfahrens in Abhängigkeit vom Abstand r der Verteilrohre 18 vom Grundwasserbrunnen 2 festzustellen. Die Ergebnisse zeigt Fig. 3, in der - aus einer Vielzahl von Messungen gemittelt - als Ordinate die Nitrat-Konzentrationen $NO_3^-$ (in $g/m^3$) in Abhängigkeit vom Abstand r (Abszisse) aufgetragen sind. Die beiden gezeigten Kurven entsprechen zwei unterschiedlichen täglichen Mengenströmen von 2000 $m^3/d$ (a) und von 3600 $m^3/d$ (b).

Fig. 3 macht deutlich, dass in jedem einzelnen Fall je nach entnommener Menge und je nach vorhandenen $NO_3^-$-Gehalt für den Abstand der Verteilrohre 18 vom Grundwasserbrunnen 2 ein Mindestwert zu bestimmen ist, der darüberhinaus noch von dem gewünschten "Denitrifikationsgrad" abhängt.

Es sei erwähnt, dass die angegebenen Werte für die Mengen

0086863

- 11 -

an anzureicherndem Wasser und an eingetragenem Wasserstoff sowie die im System gewählten Drücke in weitem Rahmen geändert werden können. So ist gegebenenfalls eine Druckerhöhung für das Anreicherungswasser unbedingt nur in dem Masse nötig, der für die Ueberwindung der Strömugswiderstände in der Anlage bis zum Austritt des angereicherten Wassers in das Grundwasser erforderlich ist. Weiterhin lassen sich selbstverständlich die Wasserstoffmengen und/oder die Drücke erniedrigen, wenn die Nitrat-Konzentration des Rohwassers gering ist. Diese Grössen können darüberhinaus ebenfalls verringert werden, wenn die für die Anreicherung verwendete Wassermenge - relativ zur entnommenen Gesamtmenge - erhöht wird. Schliesslich sei noch betont, dass die in das Wasser eingetragene Wasserstoffmenge mit Hilfe von nach bekannten Messverfahren durchgeführten Redox-Potential-Messungen im Brunnen 2 und in den Verteilrohren 18 überwacht und gesteuert werden kann.

Beispiel 2:

Ein Grundwasser mit sehr hohem Nitrat-Gehalt (etwa 210 $g/m^3$) soll nach dem neuen Verfahren zweistufig - "innere Stufe" autotroph, "äussere Stufe" heterotroph - denitrifiziert werden, wobei die tägliche Entnahmemenge wiederum 2000 $m^3/d$ beträgt.

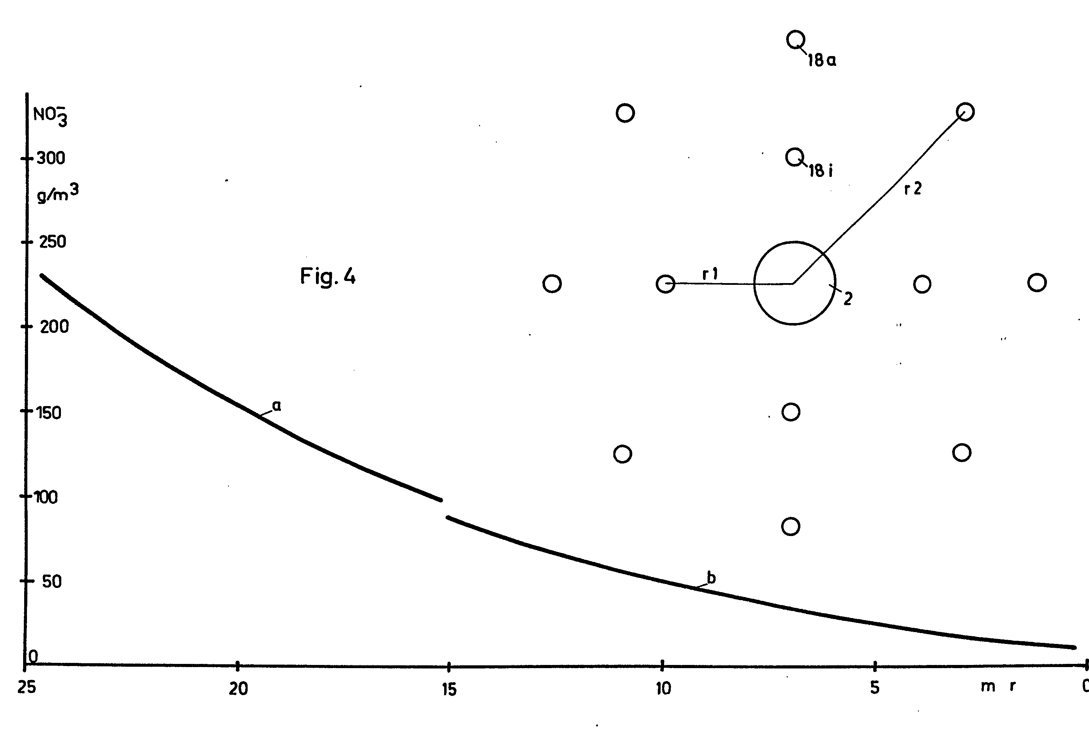

Das Verfahren wird mit einer Anlage durchgeführt, wie sie in Fig. 1 gezeigt ist; die Anordnung der inneren und der äusseren Verteilrohre 18i und 18a erfolgt in Abständen von $r_1$ = 15 m und $r_2$ = 25 m um den Grundwasserbrunnen 2 herum. Sie ist skizzenhaft in Fig. 4 dargestellt.

Das Anreichern des Wassers erfolgt mit Wasserstoff in der gleichen Weise wie im Beispiel 1, wobei unter Umständen lediglich die dafür benötigte Menge des anzureichernden Wassers so reduziert wird, dass für das zweistufige Verfahren insgesamt etwa 300 $m^3$/d angereichertes Wasser verbraucht werden.

Für die Durchführung des heterotrophen Verfahrensschrittes werden in einen Wasserstrom von etwa 100 $m^3$/d, der ebenfalls aus dem Speicher 21 oder dem Wasserbecken 12 entnommen wird, pro $m^3$ 2 kg Essigsäure an der Stelle 25 als Flüssigkeit und an der Stelle 26 etwa 10 g/$m^3$ Phosphat-Ionen zudosiert; als Phosphat-Quelle dient eine 150 g/l Dinatriumphosphat enthaltende Stammlösung, was etwa 40 g/l Phosphat-Ionen entspricht. Das so angereicherte Wasser wird über die äusseren Verteilrohre 18a in das Grundwasser eingespeist. Wie bereits erwähnt, dienen die Phosphat-Ionen dazu, die biologisch-chemischen Abbau-Reaktionen des Nitrat durch Mikroorganismen zu beschleunigen.

Aus Entnahmebohrungen für Grundwasserproben wird in Schritten von 5 m-Abständen vom Brunnen 2 das Grundwasser entnommen und auf $NO_3^-$-Ionen analysiert. Die Ergebnisse zeigt Fig. 4, wo die $NO_3^-$-Menge (in g/$m^3$) gegen den radialen Abstand zum Grundwasserbrunnen 2 aufgetragen ist; die Kurve a stellt die Wirkung der heterotrophen Denitrifikation dar, durch die etwa 50 % des Nitrat-Gehalts abgebaut werden, während Kurve b die Wirkung des autotrophen Verfahrensschrittes verdeutlicht. In gleicher Weise wie in Tabelle I gibt Tabelle II die für eventuelle Veränderungen des Rohwassers durch das neue Verfahren signifikanten Messwerte wieder. Kolonne 4a zeigt dabei die Zwischenwerte am Ende des heterotrophen Verfahrensschrittes; Kolonne 4b gibt wiederum die Messwerte nach der autotrophen Denitrifikation wieder. Ein Vergleich dieser Messwerte zeigt, dass auch in diesem

0086863

Beispiel - abgesehen vom Sauerstoff und dem angestrebten Nitrat-Abbau - keine Aenderungen in der Qualität des denitrifizierten Wassers gegenüber dem Rohwasser des Grundwasserbrunnens 2 eingetreten sind.

Tabelle I

| 1 | 2 | 3 | 4 |
|---|---|---|---|
| T | °C | 12,3 | 12,1 |
| E | $m^{-1}$ | 0,9 | 0,9 |
| Tr | NTU | 0,8 | 0,7 |
| pH | - | 7,7 | 7,9 |
| $O_2$ | $g/m^3$ | 8,2 | 3,8 |
| $NO_3^-$ | $g/m^3$ | 92 | 11,0 |
| $KMnO_4$ | $g/m^3$ | 2,4 | 2,3 |

Tabelle II

| 1 | 2 | 3 | 4a | 4b |
|---|---|---|----|----|
| T | °C | 9 | 9 | 9,2 |
| E | $m^{-1}$ | 1,2 | 1,2 | 1,2 |
| Tr | FTE (NTU) | 2,2 | 4,9 | 2,8 |
| pH | - | 7,3 | 7,6 | 7,8 |
| $O_2$ | $g/m^3$ | 4,1 | 1,8 | 1,6 |
| $NO_3^-$ | $g/m^3$ | 120 | 103,0 | 5,0 |
| $KMnO_2$ | $g/m^3$ | 3,8 | 5,2 | 3,9 |

Patentansprüche

1. Verfahren zur biologischen Denitrifikation von Grund- und/oder durch Uferfiltration gewonnenem Oberflächenwasser, die einem Grundwasserbrunnen entnommen werden, mit Hilfe von autotrophen und/oder heterotrophen Mikroorganismen, dadurch gekennzeichnet, dass das zu denitrifizierende Rohwasser im Umgebungsbereich des Grundwasserbrunnens (2) direkt im Boden künstlich denitrifiziert wird, indem Wasser mit Wasserstoff und/oder organischem Kohlenstoff angereichert und um den Grundwasserbrunnen (2) herum verteilt in die wasserführenden Bodenschichten eingebracht wird.

2. Verfahren nach Anspruch 1, dadurch gekennzeichnet, dass das anzureichernde Wasser vor der Beladung auf erhöhten Druck gebracht wird.

3. Verfahren nach Anspruch 1, dadurch gekennzeichnet, dass als anzureicherndes Wasser ein Teil des dem Grundwasserbrunnen (2) entnommenen Rohwassers verwendet wird.

4. Verfahren nach Anspruch 1, dadurch gekennzeichnet, dass dem mit Wasserstoff angereicherten Wasser zusätzlich Kohlendioxid ($CO_2$) zugegeben wird.

5. Verfahren nach Anspruch 1, dadurch gekennzeichnet, dass dem anzureichernden Wasser als organischer Kohlenstoff Essigsäure oder Aethanol beigemischt wird.

6. Verfahren nach Anspruch 1, dadurch gekennzeichnet, dass dem mit organischem Kohlenstoff angereicherten Wasser zusätzlich Phosphate als Nährstoffe beigemischt werden.

7. Anlage zur Durchführung des Verfahrens nach Anspruch 1, gekennzeichnet durch eine Wasserquelle (12, 21) für
anzureicherndes Wasser, ferner durch mindestens ein Vorrichtung (15 oder 25) zum Anreichern des der Wasserquelle
(12, 21) entnommenen Wassers mit Wasserstoff oder organischem Kohlenstoff und schliesslich durch ein von der Anreicherungsvorrichtung (15 oder 25) ausgehendes Verteilsystem (17 oder 27), das zu um den Grundwasserbrunnen (2)
herum im Abstand verteilten, in die wasserführenden Bodenschichten reichenden Verteilrohren (18) führt.

8. Anlage nach Anspruch 7, dadurch gekennzeichnet, dass
die Verteilrohre auf mindestens zwei Kreisen mit unterschiedlichen Radien ($r_1$, $r_2$) konzentrisch um den Grundwasserbrunnen (2) herum angeordnet sind.

9. Anlage nach Anspruch 8, dadurch gekennzeichent, dass
die vom Grundwasserbrunnen (2) weiter entfernten Verteilrohre (18a)mit einer Anreicherungsvorrichtung (25) für
organischen Kohlenstoff verbunden sind, während die Verteilrohre (18i)näher beim Grundwasserbrunnen (2) an die
Anreicherungsvorrichtung (15) für Wasserstoff angeschlossen
sind.

Fig. 1

1/4

0086863

Fig. 2

Fig. 3

3/4

0086863

Fig. 4

Europäisches
Patentamt

EUROPÄISCHER RECHERCHENBERICHT

**0086863**
Nummer der Anmeldung

EP 82 10 2197

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-A-2 607 114 (EUROC)<br><br>* Seite 8, Ansprüche 1,2,6; Seite 9, Ansprüche 9,10; Seite 1, letzter Absatz - Seite 2; Seite 9, Ansprüche 12,13 * | 1-3,7, 8 | C 02 F 3/30<br>C 02 F 3/28 |
| | --- | | |
| X | DD-A- 140 031 (H. KLAPPER et al.)<br>* Seite 5, Ansprüche 1,4 * | 1,5 | |
| | --- | | |
| A | K.R. DIETRICH: "Die Abwassertechnik", 2. Auflage, Dr. Alfred Hüthig Verlag, 1973, Seite 173, Heidelberg, DE.<br>* Seite 173, Zeilen 23-26 * | 6 | |
| | --- | | |
| A | JOURNAL OF WATER POLLUTION CONTROL FEDERATION, Band 49, Nr. 6, Juni 1977, Seite 1029, Washington D.C., USA<br>* Seite 1029, rechte Spalte, letzter Absatz * | 4 | **RECHERCHIERTE SACHGEBIETE (Int. Cl. ³)**<br><br>C 02 F |
| | --- | | |
| A | FR-A-2 031 386 (Y. REIJONEN et al.)<br>* Seite 5, Ansprüche 6,7; Abbildungen * | | |
| | --- | | |
| A | US-A-3 829 377 (UNION OIL)<br><br>* Spalte 2, Zeilen 26-45; Abbildung * | | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 18-05-1982 | TEPLY J. |